# EUROPEAN PATENT SPECIFICATION

(11) **EP 1 609 731 B1**
(45) Date of publication and mention of the grant of the patent: **19.03.2008**
(21) Application number: 04723408.3
(22) Date of filing: 25.03.2004
(51) Int. Cl.: B65D 30/20, B29C 49/00, B65B 3/02

(54) **METHOD OF MANUFACTURING SELF-SUPPORTABLE BAG**
VERFAHREN ZUR HERSTELLUNG EINES SELBSTRAGENDEN BEUTELS
PROCEDE DE PRODUCTION D'UN SAC AUTOSTABLE

(30) Priority: 26.03.2003 JP 2003086478
(43) Date of publication of application: 28.12.2005
(73) Proprietor: KAO CORPORATION, Tokyo 103-0025 (JP); Yoshino Kogyosho Co., Ltd., Tokyo 136-8531 (JP)
(72) Inventor: INABA, Shinichi KAO CORPORATION, Tokyo 1310044 (JP); INAGAWA, Yoshinori KAO CORPORATION, Tokyo 1310044 (JP)
(74) Representative: Vossius & Partner
(86) International application number: PCT/JP2004/004213
(87) International publication number: WO 2004/085275

(56) References cited:
- EP-A- 0 769 367
- WO-A-99/41155
- JP-A- 4 033 824
- JP-A- 8 103 943
- JP-A- 51 122 570
- JP-A- 2004 043 003
- JP-A- 2004 142 773
- US-A- 4 526 565
- US-B1- 6 244 747
- PATENT ABSTRACTS OF JAPAN vol. 1999, no. 10, 31 August 1999 (1999-08-31) & JP 11 130091 A (UENO HIROSHI), 18 May 1999 (1999-05-18)

## Description

### TECNICAL FIELD

The present invention relates to a method of manufacturing a self-supported bag.

### BACKGROUND ART

As a method of manufacturing a synthetic resin container, as described in Japanese Patent Application Publication (JP-B) No. 54-37636, there is a method of blowing a parison from a blowing pinhole within a metal mold, heating and sealing the pinhole in a state of maintaining a shape of a formed product, and preventing foreign matter from making an intrusion into the formed product (pages 1 to 2 and FIGS. 7 and 8).

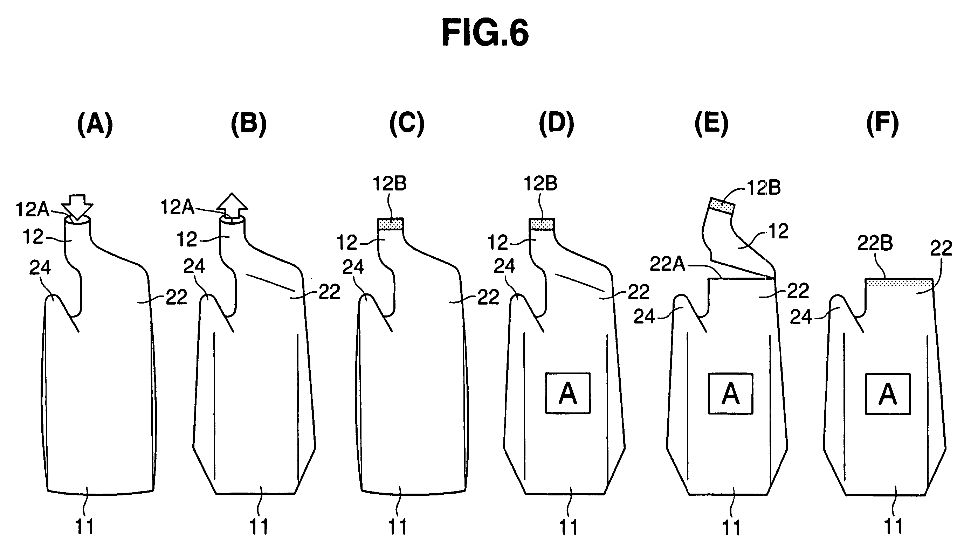

As another method of manufacturing a synthetic resin container, as described in Japanese Patent Application Publication (JP-B) No. 3-66141, there is a method of blowing a parison from an air blowing opening within a metal mold, sealing the opening in a state of maintaining a shape of a formed product, and preventing foreign matter from making an intrusion into the formed product (page 2 and FIGS. 6 to 9).

In Japanese Patent Application Publication (JP-B) Nos. 54-37636 and 3-66141, since an empty container is formed by sealing in a state of maintaining the shape of the formed product, storage efficiency and a transport efficiency of the empty container are deteriorated. Further, since a lot of air exists within the container, the volume increases when the storage temperature rises, so that the container deforms while in a state of being packed in a box, and the box swells up. In the case that the storage temperature lowers, the container deforms due to low pressure, and the dent can not be restored. JP-A-4-33 824 describes a method of manufacturing a self-supported bag by molding a synthetic resin bag main body by a metal mold, and reducing an internal pressure of the molded bag main body so as to fold the main body. The body is then sealed. JP 51-122 570 describes folding a molded bag while reducing pressure within the bag.

### DISCLOSURE OF THE INVENTION

The present invention is specified by the claims.

### BRIEF DESCRIPTION OF THE DRAWINGS

FIG. 1 is a perspective view showing a self-supported bag;
FIG. 2 is a perspective view showing examples of folded states of the self-supported bag;
FIG. 3 is a schematic view showing the manufacturing steps of the self-supported bag;
FIG. 4 is a schematic view showing empty bag manufacturing stages of the self-supported bag;
FIG. 5 is a schematic view showing an empty bag of the self-supported bag through transportation; and
FIG. 6 is a schematic view showing another example of the manufacturing steps of the self-supported bag.

### DETAILED DESCRIPTION OF THE INVENTION

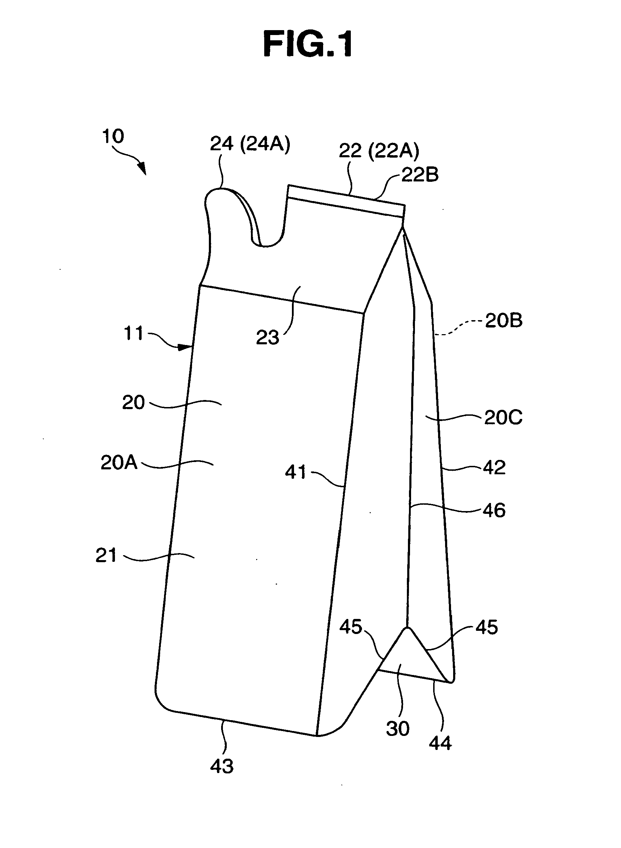

A self-supported bag 10 is formed by blow molding a synthetic resin bag main body 11 constituted by a body portion 20 and a bottom portion 30 in a three-dimensional shape (a stereoscopic shape) as shown in FIG. 1, and the entire bag main body 11 can be set in a folded state in a preliminary step toward filling the bag main body 11 with a content agent.

The bag main body 11 has a content agent receiving portion 21 constituted by the body portion 20 and the bottom portion 30, and a filling port forming portion 22 which forms a wide opening extending to the entire width of an upper edge portion of the body portion 20 or nearly the entire width, and forms a filling port 22A for the content agent. The bag main body 11 is formed by blow molding the entire receiving portion 21, the filling port forming portion 22 and a shoulder portion 23 in such a manner as to smoothly join the receiving portion 21 and the filling port forming portion 22 by the shoulder portion 23. The shoulder portion 23 is narrowed in an inverted-V shape from a side of the receiving portion 21 toward a side of the filling port forming portion 22, in a side view of the self-supported bag 10 (in a direction seen along a longitudinal direction of a seal portion 22B mentioned below of the filling port forming portion 22).

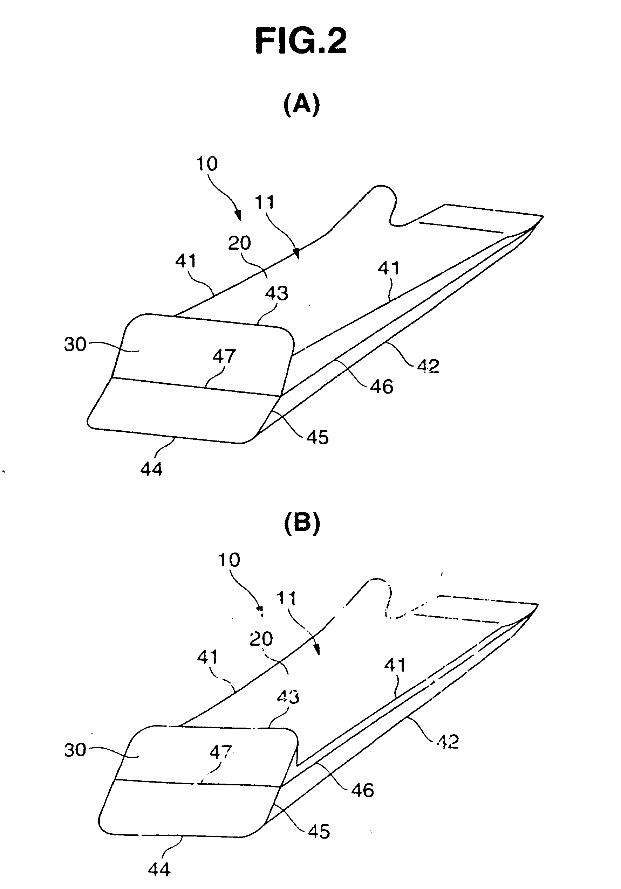

The bag main body 11 is structured such that the body portion 20 is constituted by a front face portion 20A, a back face portion 20B and both side face portions 20C, a ridge line portion 41 is provided at the boundary between the front face portion 20A and both the side face portions 20C in accordance with blow molding, a ridge line portion 42 is provided at the boundary between the back face portion 20B and both side face portions 20C, a ridge line portion 43 is provided at the boundary between the front face portion 20A and the bottom portion 30, a ridge line portion 44 is provided at the boundary between the back face portion 20B and the bottom portion 30, and a ridge line portion 45 is provided at the boundary between both side face portions 20C and the bottom portion 30. Further, the bag main body 11 is structured such that a ridge line portion 46 extending along a parting line of a blow molding metal mold is provided in a center portion along the longitudinal direction of both side face portions 20C, and a ridge line portion 47 (shown in FIG. 2) extending along the parting line of the blow molding metal mold is provided in a center portion of the bottom portion 30.

The self-supported bag 10 is structured such that the content agent is filled from the filling port 22A, the front face portion 20A and the back face portion 20B of the filling port forming portion 22 are thereafter clamped by a seal bar, and the front face portion 20A and the back face portion 20B are fusion bonded and sealed by heat sealing or ultrasonic sealing or the like. Accordingly, the filling port forming portion 22 forms the seal portion 22B.

The self-supported bag 10 can form a pouring port forming portion 24 for forming a pouring port 24A in a part of the upper edge side of the body portion 20, at the time of blow molding. The pouring port 24A is formed by cutting the pouring port forming portion 24.

The self-supported bag 10 is structured such that the entire bag main body 11 is folded, for example, in the following manner (FIG. 2).

There is an substantially flat folded aspect obtained by making the body portion 20 flat, folding the entire flat bottom portion 30 with respect to a lower portion of the body portion 20, and folding the bottom portion 30 so as to be folded over the body portion 20 in parallel. The aspect includes a structure that the ridge line portion 46 of both side face portions 20C is protruded towards the outer side of the body portion 20 (FIG. 2A), and a structure that the ridge line portion 46 is protruded towards the inner side of the body portion 20 (FIG. 2B). The self-supported bag 10 in which the ridge line portion 46 is protruded towards the outer side is thinner in its entire thickness of the folded state.

The self-supported bag 10 is preferably used as a product self-supported bag which is produced by filling a content agent including at least one of a surface active agent from 0.1% to 50% and a solvent from 0.1% to 50% as components.

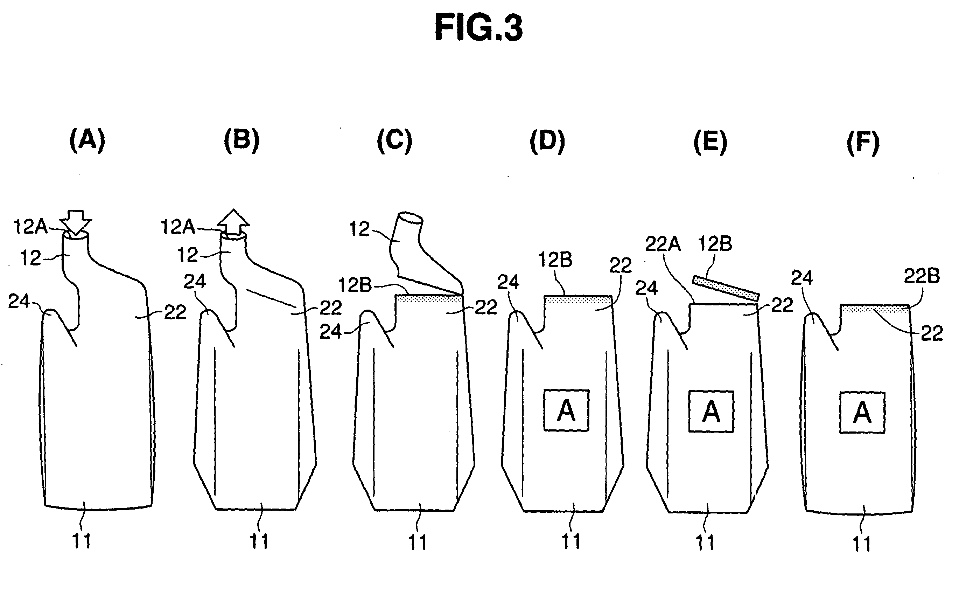

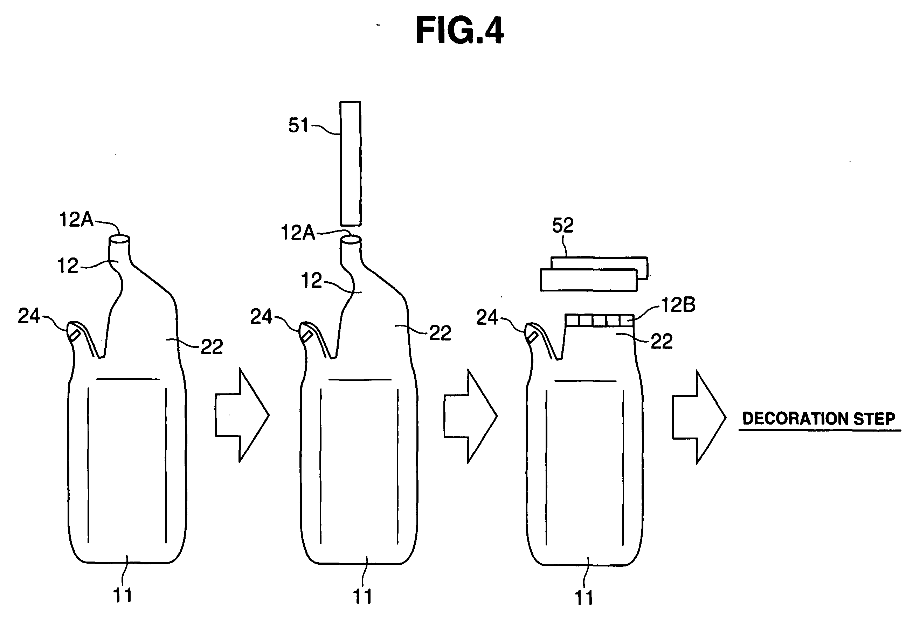

A description will be given as to the manufacturing procedures of the self-supported bag (FIGS. 3 and 4). The self-supported bag 10 is manufactured in accordance with the following procedures in a manufacturing line briefly shown in FIG. 4.

### (1) Molding step of bag main body 11 (FIGS. 3A and 4)

The synthetic resin bag main body 11 can be manufactured in accordance with direct blow molding. In direct blow molding, the bag main body 11 is formed by extruding a parison into the metal mold, and drawing in a circumferential direction on the basis of blowing the air to an inner portion of the parison. The direct blow molding forms the bag main body 11 constituted by a single resin layer or a laminated resin layer. As a composition resin material of the bag main body 11 in accordance with the direct blow molding, it is possible to employ a low density polyethylene (LDPE) or a linear low density polyethylene (L-LDPE) or a high density polyethylene (HDPE) in the case of the single layer, and it is possible to employ an outer layer constituted by the HDPE and an inner layer constituted by the LDPE or L-LDPE, or the inner layer constituted by the HDPE and the outer layer constituted by the LDPE, in the case of the laminated layer. The molded bag main body 11 is provided with a tubular neck portion 12 having an air blowing opening 12A in a pointed end, continuously in an upper portion of the filling port forming portion 22 mentioned above.

### (2) Folding step of bag main body 11 (FIGS. 3B and 4)

A vacuum suction device 51 is inserted and attached to the air blowing opening 12A of the molded bag main body 11, the volumetric capacity of the bag main body 11 is reduced by depressurizing the internal pressure of the bag main body 11, and the bag main body 11 is folded in a flat shape. The folded aspect of the bag main body 11 is, for example, as shown in FIG. 2 mentioned above.

In this case, the bag main body 11 may be pressed by applying an external force so as to reduce the volumetric capacity, thereby being folded in a flat shape.

### (3) Leak inspection step of bag main body 11

A leak inspection of the bag main body 11 is executed by checking the decompression degree by a pressure gauge or the like provided in a piping system of the vacuum suction device 51 in a process of depressurizing the bag main body 11 in the item (2) mentioned above.

### (4) Sealing step of bag main body 11 (FIGS. 3C and 4)

The air blowing opening 12A is sealed while keeping the volumetric capacity reduced state of the folded bag main body 11. In the present embodiment, a base portion joined to the filling port forming portion 22 of the tubular neck portion 12 is heat-sealed by a heat sealing device 52, whereby the seal portion 12B is formed and an upper portion of the seal portion 12B is cut and removed.

### (5) Decoration step of bag main body 11 (FIGS. 3D and 4)

The bag main body 11 sealed in the folded state is fed to a decoration step, and a label A is stuck or printed on the surface of the bag main body 11.

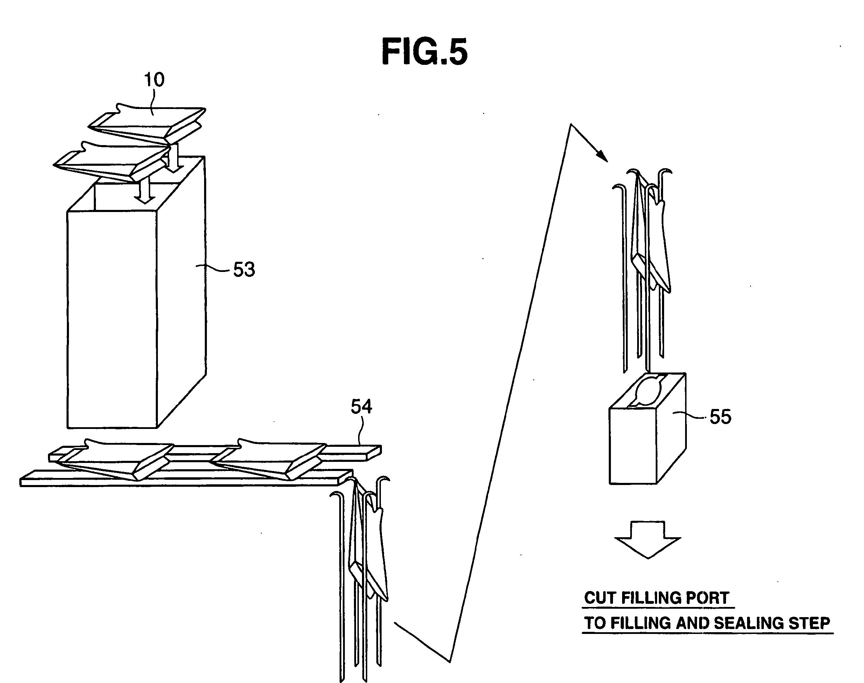

Next, a handling procedure of the self-supported bag 10 is as follows (FIGS. 3 and 5)
(1) The self-supported bags 10 manufactured in the manufacturing line mentioned above are packed in a box 53 and are stacked flat and stored.
(2) The self-supported bags 10 are supplied to a feeding line 54 from the box 53 so as to be fed, are put in a trapezoidal bag holding device 55, and are fed to a filling machine.
(3) When the self-supported bag 10 reaches the filling machine, the filling port forming portion 22 (the seal portion 12B) of the bag main body 11 is cut, and the filling port 22A is formed so as to be open (FIG. 3E). Subsequently, the bag main body 11 is three-dimensionally expanded, the content agent is filled from the filling port 22A, and thereafter the filling port 22A is sealed (FIG. 3F). The seal portion 22B is formed by heat-sealing the remaining portion of the filling port forming portion 22 by the heat sealing device.

In accordance with the present invention, the following operations and effects can be achieved.
[1] The bag main body 11 can be stored and fed while maintaining its folded state, by blow molding the synthetic resin flexible bag main body 11 in a three-dimensional shape (a stereoscopic shape), folding the molded bag main body 11 and sealing the opening 12A of the bag main body 11, and the bag main body 11 can be self-supported by being expanded three-dimensionally at a time of filling with the content agent. The volumetric capacity of the bag main body 11 is reduced by folding, whereby it is possible to improve the storing efficiency and feeding efficiency.
[2] It is possible to prevent foreign matter from making an intrusion into the empty bag at the time of storing and feeding the bag main body in the empty bag state, by sealing the opening 12A of the bag main body 11 folded in the item [1] mentioned above.
   It is possible to maintain an aseptic condition of the bag inner portion until the content agent filling stage, by quickly sealing the opening 12A after blow molding the bag main body 11 in the item [1] mentioned above.
[3] If the volumetric capacity reduced state of the bag main body 11 folded in the item [1] mentioned above is maintained by the seal portion 12B and the bag main body 11 is not expanded, it is possible to check the existence any pinhole in the bag main body 11.
[4] The bag main body 11 is formed thinly and flexible in accordance with the blow molding, and it is possible to reduce the amount of resin used in comparison with a conventional hard molded bottle or a bag formed by affixing layers of film, and it is possible to stably store in a stacking flat state.
[5] The molded bag main body 11 can be rapidly folded by depressurizing the internal pressure of the bag main body 11 by means of the vacuum suction device 51.
[6] It is possible to easily carry out a total leak inspection of the bag main body 11 by checking the decompression degree in the process of depressurizing the bag main body 11 in the item [5] mentioned above.
[7] It is possible to easily fold the molded bag main body 11 by pressurizing the bag main body 11.

FIG. 6 shows a modified embodiment of the manufacturing procedure and the handling procedure shown in FIG. 3 of the self-supported bag 10.

The manufacturing procedure in FIG. 6 of the self-supported bag 10 is different from that in FIG. 3 in a point of a sealing step of the bag main body 11. In the sealing step of the bag main body 11, as shown in FIG. 6C, the seal portion 12B is formed by heat sealing the air blowing opening 12A in the leading end of the tubular neck portion 12. Accordingly, it is not necessary to cut and remove the upper portion of the seal portion 12B in the sealing step of the bag main body 11, and it is possible to grip the tubular neck portion by means of a robot arm or the like so as to securely put the bag main body in the trapezoidal holding device, in the feeding step.

In the handling procedure shown in FIG. 6 of the self-supported bag 10, the tubular neck portion 12 is cut and removed, as shown in FIG. 6E, at the same time of cutting the filling port forming portion 22 of the bag main body 11 in the filling machine so as to open the filling port 22A.

In this case, in the self-supported bag 10, the following operations and effects can be achieved.
(1) The content agent filling port forming portion 22 can be provided in the bag main body 11 around the entire width of the upper edge portion of the body portion 20 of the bag main body 11 or nearly the entire width, and the filling property of the content agent is improved.
(2) The content agent pouring port forming portion 24 from the bag main body 11 can be formed as a part of the body portion 20 at the time of blow molding the bag main body 11, or can be formed by sealing the opening portion in the upper edge of the blow-molded body portion 20. Further, since the pouring port forming portion 24 can be stereoscopically formed at the time of blow molding the bag main body 11, the pouring port forming portion 24 is difficult to close.
(3) Since the bag main body 11 is blow molded, it is possible to widely omit the film cutting and the film sealing which are required in the conventional self-supported bag, and the manufacturing step is simple.
(4) Since the bag main body 11 is not structured by affixing layers of the sheet, it is not always necessary to structure the bag main body 11 by using the laminated resin in which an adhesive layer is interposed. Accordingly, it is possible to structure the bag main body 11 by a single layer of resin, there is no risk that the content agent including the surface active agent and the solvent permeates into the adhesive layer of the laminated film and the laminated resin does not peel and the like, and it is possible to stabilize the bag quality.
(5) The body portion 20 and the bottom portion 30 of the bag main body 11 are integrally formed, are strong against impact generated upon dropping, and are hard to be damaged.
(6) It is possible to easily pour by tilting the pouring port forming portion 24 formed in the bag main body 11 at an angle between 0 degree and 90 degrees, preferably in a range between 30 degrees and 60 degrees, more preferably at 45 degrees with respect to a horizontal direction which is parallel to the bottom portion 30 of the bag main body 11.
(7) Since the metal mold can be designed such that the pouring port forming portion 24 formed in the bag main body 11 is formed so as to protrude to the outer side of the bag main body 11, the protruding shape can be freely structured, and it is possible to easily manufacture the bag which can easily pour, by increasing the protruding length of the pouring port, making the width of the pouring port wide, and the like.

In this case, the self-supported bag in accordance with the present invention is not limited to the bag formed by the blow molding, and may be structured as a bag formed by injection molding, as long as the bag is molded by the metal mold.

## Claims

1. A method of manufacturing a self-supported bag (10) comprising the steps of molding a synthetic resin bag main body (11) by a metal mold, and reducing an internal pressure of the molded bag main body (11) so as to fold the bag main body (11) in a preliminary step toward filling with a content agent, wherein a leak inspection of the bag main body (11) is executed by checking a decompression degree in a process of depressurizing the bag main body (11).

2. The method as claimed in claim 1, wherein the main body (11) is blow molded.

3. The method as claimed in any of the preceding claims, wherein the bag main body (11) is molded with a filling port forming portion (22) and a pouring port forming portion (24).

4. The method of claim 3, wherein the bag main body (11) is provided with a tubular neck portion (12) having an air blowing opening (12A) in a pointed end, continuously in an upper portion of the filling port forming portion (22).

5. The method of claim 4, wherein, after molding the bag main body, a vacuum suction device (51) is inserted and attached to the air blowing opening (12A).

6. The method of claim 5, wherein, after executing the leak inspection, a base portion of the tubular neck portion (12) joined to the filling port forming portion (22) is heat-sealed to form a seal portion (12B).

7. The method of claim 6, further comprising the step of cutting and removing the tubular neck portion (12) above the seal portion (12B).

8. The method of claim 7, further comprising the step of opening a filling port (22A) in the bag main body by cutting below the seal portion (12B).

9. The method of claim 8, further comprising the steps of filling a content agent through the filling port (22A) and sealing the filling port (22A).

## Patentansprüche

1. Verfahren zum Herstellen eines selbsttragenden Beutels (10), das die Schritte aufweist: Formen eines Kunstharzbeutelhauptkörpers (11) durch eine Metallform und Reduzieren eines Innendrucks des geformten Beutelhauptkörpers (11), um den Beutelhauptkörper (11) in einem vorbereitenden Schritt zum Zweck des Füllens mit einem Inhaltsmittel zu falten, wobei eine Undichtigkeitsprüfung des Beutelhauptkörpers (11) ausgeführt wird, indem in einem Prozeß einer Druckherabsetzung im Beutelhauptkörper (11) ein Druckverminderungsgrad geprüft wird.

2. Verfahren nach Anspruch 1, wobei der Hauptkörper (11) blasgeformt wird.

3. Verfahren nach einem der vorhergehenden Ansprüche, wobei der Beutelhauptkörper (11) mit einem Füllöffnungsbildungsabschnitt (22) und einem Gießöffnungsbildungsabschnitt (24) geformt wird.

4. Verfahren nach Anspruch 3, wobei der Beutelhauptkörper (11) mit einem röhrenförmigen Halsabschnitt (12) versehen ist, der eine Luftblasöffnung (12A) in einem spitz zulaufenden Ende aufweist, kontinuierlich in einem oberen Abschnitt des Füllöffnungsbildungsabschnitts (22).

5. Verfahren nach Anspruch 4, wobei nach dem Formen des Beutelhauptkörpers eine Vakuumsaugvorrichtung (51) in die Luftblasöffnung (12A) eingeführt und an ihr befestigt wird.

6. Verfahren nach Anspruch 5, wobei nach dem Ausführen der Undichtigkeitsprüfung ein Basisabschnitt des röhrenförmigen Halsabschnitts (12), der mit dem Füllöffnungsbildungsabschnitt (22) verbunden ist, heißversiegelt wird, um einen Dichtungsabschnitt (12B) zu bilden.

7. Verfahren nach Anspruch 6, das ferner den Schritt des Abschneidens und Entfernens des röhrenförmigen Halsabschnitts (12) über dem Dichtungsabschnitt (12B) aufweist.

8. Verfahren nach Anspruch 7, das ferner den Schritt des Öffnens einer Füllöffnung (22A) im Beutelhauptkörper durch Schneiden unter dem Dichtungsabschnitt (12B) aufweist.

9. Verfahren nach Anspruch 8, das ferner die Schritte des Füllens eines Inhaltsmittels durch die Füllöffnung (22A) und Abdichtens der Füllöffnung (22A) aufweist.

## Revendications

1. Procédé pour fabriquer un sac auto-supporté (10) comprenant les étapes de moulage d'un corps principal de sac (11) en résine synthétique avec un moule en métal, et réduction d'une pression interne du corps principal de sac (11) moulé, afin de plier le corps principal de sac (11) dans une étape préliminaire vers le remplissage avec un agent de contenu, dans lequel une inspection de fuite du corps principal de sac (11) est exécutée en vérifiant un degré de décompression lors d'un procédé de dépressurisation du corps principal de sac (11).

2. Procédé selon la revendication 1, dans lequel le corps principal (11) est moulé par soufflage.

3. Procédé selon l'une quelconque des revendications précédentes, dans lequel le corps principal de sac (11) est moulé avec une partie de formation d'orifice de remplissage (22) et une partie de formation d'orifice de déversement (24).

4. Procédé selon la revendication 3, dans lequel le corps principal de sac (11) est prévu avec une partie de col tubulaire (12) ayant une ouverture de soufflage d'air (12A) dans une extrémité pointue, de manière continue dans une partie supérieure de la partie de formation d'orifice de remplissage (22).

5. Procédé selon la revendication 4, dans lequel, après le moulage du corps principal de sac, un dispositif d'aspiration de vide (51) est inséré et fixé sur l'ouverture de soufflage d'air (12A).

6. Procédé selon la revendication 5, dans lequel, après avoir exécuté l'inspection des fuites, une partie de base de la partie de col tubulaire (12) assemblée à la partie de formation d'orifice de remplissage (22) est thermosoudée pour former une partie de joint d'étanchéité (12B).

7. Procédé selon la revendication 6, comprenant en outre les étapes consistant à couper et retirer la partie de col tubulaire (12) au-dessus de la partie de joint d'étanchéité (12B).

8. Procédé selon la revendication 7, comprenant en outre l'étape consistant à ouvrir un orifice de remplissage (22A) dans le corps principal de sac en coupant au-dessous de la partie de joint d'étanchéité (12B).

9. Procédé selon la revendication 8, comprenant en outre les étapes consistant à déverser un agent de contenu par l'orifice de remplissage (22A) et fermer hermétiquement l'orifice de remplissage (22A).
